# EUROPEAN PATENT APPLICATION

(11) **EP 4 826 717 A1**
(43) Date of publication of application: **21.10.2026**
(21) Application number: 26171262.4
(22) Date of filing: 08.04.2026
(51) Int. Cl.: G10L 25/30, G10L 21/0272, G10L 25/18, G10L 25/24

(54) **SELF-SUPERVISED AUDIO REPRESENTATION LEARNING WITH THE RECONSTRUCTION AND SEPARATION OF MIXED AUDIO SOURCES**

(30) Priority: 15.04.2025 US 202519179753
(71) Applicant: Robert Bosch GmbH, 70442 Stuttgart (DE)
(72) Inventor: Kumar, Abinaya, PIttsburgh, PA, 15212 (US); Ghaffarzadegan, Shabnam, Livermore, CA, 94550 (US); Leem, Song-Gyun, Plano, TX, 75093 (US)

(57) **Abstract**

Methods for training an audio transformer model for generalized tasks within complex audio environments are disclosed. Audio-based data samples are transformed into Mel spectrograms, randomly mixed together, and then provided to an encoder of the audio transformer model. By masking a subset of spectrogram patches within the mixed spectrogram, the encoder-decoder-decoder architecture of the model is configured to reconstruct the full mixed spectrogram and is also configured to separate the received mixed spectrogram into what the model predicts are the original two spectrograms. By incorporating both a reconstruction decoder and a separation decoder, a trained version of the audio transformer model is then prepared for generalized tasks within complex audio environments.

## Description

### TECHNICAL FIELD

The present disclosure relates to methods and systems for training a transformer model, based on a self-supervised learning technique, to reconstruct and separate mixed audio signal sources.

### BACKGROUND

The use of machine learning for building general-purpose audio representation models has primarily operated on training the model on a single audio source, and on causing the model to reconstruct the single sound source with small perturbation or with partial masking. However, these methods lead to learned representations that lack complex semantic audio scene information, causing these machine learning techniques to be severely limited in terms of application into real-world audio environments.

### SUMMARY

In an embodiment, a computer-implemented method for training an audio transformer model is provided. The computer-implemented method includes: receiving a mixed spectrogram comprising a first spectrogram and a second spectrogram that has been divided into spectrogram patches; masking a subset of the spectrogram patches from the audio transformer model, wherein other spectrogram patches of the spectrogram patches remain unmasked; executing the audio transformer model to cause the audio transformer model to predict the masked subset of the spectrogram patches, wherein the executing comprises: executing an encoder to encode the other spectrogram patches and generate an encoded patch sequence; executing a reconstruction decoder to predict normalized values of the spectrogram patches of the mixed spectrogram, based on the encoded patch sequence, and generate a reconstructed prediction of the mixed spectrogram; executing a separation decoder to predict normalized values of spectrogram patches of the first spectrogram, based on the encoded patch sequence, and generate separate predictions of the first and the second spectrograms; computing a reconstruction loss based on the reconstructed prediction of the mixed spectrogram and the mixed spectrogram; computing a separation loss based on the separate predictions of the first and the second spectrograms and the first and second spectrograms; determining a total loss based on reconstruction loss and the separation loss; and updating weights of the audio transformer model based on the total loss; and outputting a trained version of the audio transformer model.

In another embodiment, a system including a processor and memory containing instructions that, when executed by the processor, cause the processor to perform these steps.

In another embodiment, a non-transitory computer-readable medium includes instructions that, when executed by a processor, cause the processor to perform these steps.

### BRIEF DESCRIPTION OF THE DRAWINGS

FIG. 1 illustrates a system for training and utilizing a machine learning model, such as a transformer-based neural network, according to some embodiments.
FIG. 2 illustrates a computer-implemented method for training and utilizing a machine learning model, according to some embodiments.
FIG. 3A illustrates a process of performing a self-supervised learning technique onto an audio transformer model such that the model is configured to learn reconstruction and separation of mixed audio sources, according to some embodiments.
FIG. 3B illustrates a later process of executing the trained audio transformer model for use by a task-specific classifier, according to some embodiments.
FIG. 4 illustrates a given iteration of training the audio transformer model to learn reconstruction and separation of mixed audio sources, according to some embodiments.
FIG. 5 is a flow diagram that illustrates a process of training, via a self-supervised audio representation learning process, an audio transformer model, according to some embodiments.
FIG. 6 illustrates a schematic diagram of an interaction between a computer-controlled machine and a control system, according to some embodiments.
FIG. 7 depicts a schematic diagram of the control system of FIG. 6 configured to control a manufacturing machine, such as a punch cutter, a cutter, or a gun drill, of a manufacturing system, such as part of a production line, according to some embodiments.
FIG. 8 depicts a schematic diagram of the control system of FIG. 6 configured to control a power tool, such as a power drill or driver, that has an at least partially autonomous mode, according to some embodiments.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

As audio downstream tasks become increasingly diverse, the training of representation models scales accordingly, with the attempt to train models on massive amounts of audio data quickly becoming unrealistic. Previous attempts to train models for audio environments have focused on the use of a single sound source during training rounds. For example, contrastive learning approaches add small perturbations to the single audio source.

However, these past approaches might not adequately represent complex audio scenes with rich semantic information. Moreover, the massive amounts of audio data samples that would be needed to iterate through enough small perturbations would not yield a trained model that is ready for generalized tasks in a downstream classifier.

The use of self-supervised learning, as applied herein, thus overcomes this limitation.

As an example of manufacturing use cases, an end-of-line testing scenario includes a model that can quickly adapt to various test benches. The collection of extensive data from various testing benches is both time consuming and costly. Therefore, an effective representation model that makes use of self-supervised learning can mitigate the challenge of extensive data collection and facilitate rapid adaptation to new data. The models described herein can extract a wide range of features from raw audio data, leading to effective performance in various related tasks, even when labeled data are scarce or non-existent.

Moreover, developing a general-purpose audio representation model is crucial when applying such a model to various applications, such as speech recognition, sound event detection, sound localization, and anomaly detection. For example, in industrial and manufacturing settings, the data collected under varying conditions is often limited and can encounter domain shift issues based on environmental factors.

The present disclosure applies self-supervised learning techniques to audio transformer models for training purposes. By leveraging multiple audio mixtures to train the model, the audio transformer model learns from more complex combinations of audio and sound events, thus leading to an increased generalization capability of the trained model. More specifically, the audio transformer models described herein include two different decoders: a reconstruction decoder and a separation decoder. The reconstruction decoder involves reconstruction of mixed sources from a masked audio input to the model. Mixed sound sources are partially masked, and the audio transformer model is then trained to reconstruct the mixed sound sources, including the masked portions. Predicting the masked portions specifically enables the audio transformer model to learn generalizable features for downstream classifier-based tasks. The separation decoder involves separation of the mixed sources, in which the audio transformer model is trained to separate the audio sources based on controlled sound mixtures that are provided to the model. Incorporating audio mixture separation via self-supervised learning enables the audio transformer model to capture intricate relationships between different sound events, thus leading to improved performance of the model.

By incorporating mixture separation into the SSL process, our approach better captures the intricate relationships between different sound events, ultimately leading to improved performance.

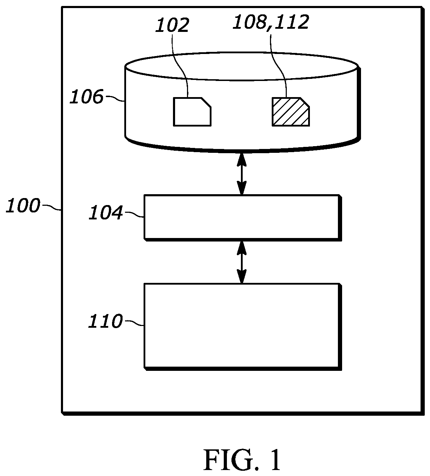

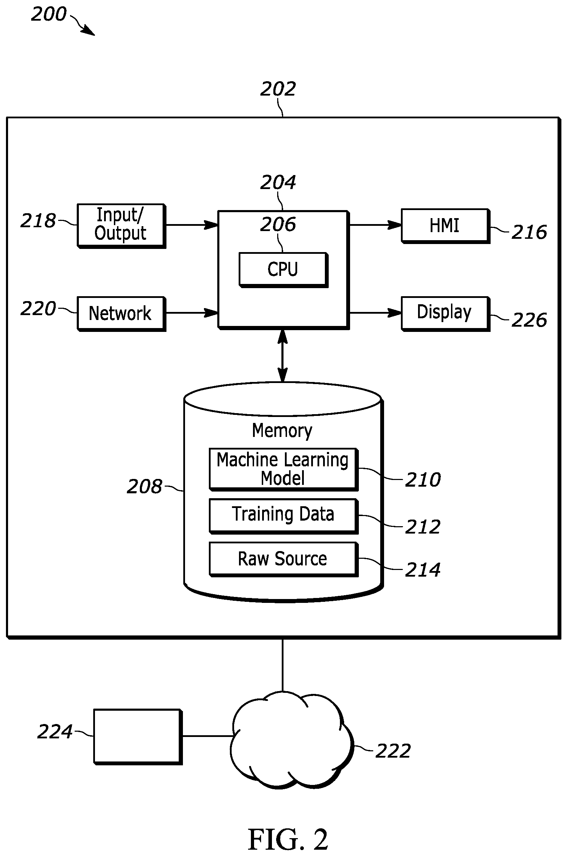

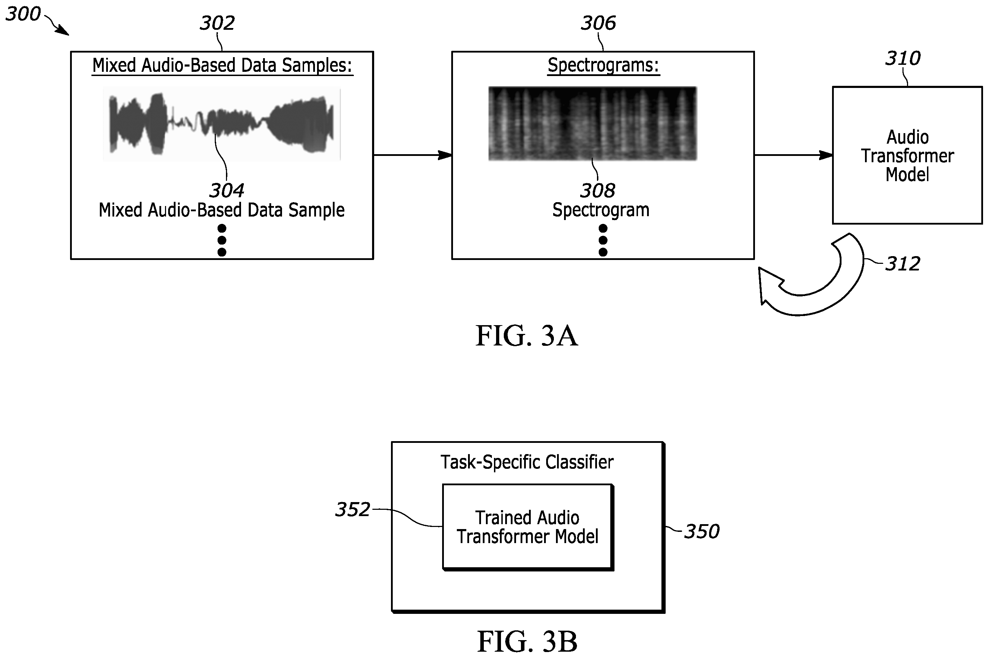

The following paragraphs pertaining to FIGS. 1 and 2 describe a general training process of machine learning models, such as transformers, in order to provide context for the additional description in FIGS. 3A, 4, and 5, wherein a transformer architecture that includes an encoder, a reconstruction decoder, and a separation decoder is trained, using a self-supervised learning technique, to reconstruct and separate out mixed audio signal sources. The trained transformer may then be incorporated into a task-specific classifier, as additionally described herein with regard to FIGS. 3B, 6, 7, and 8.

In addition, the "training" of the audio transformer model, as used herein, refers to a process of providing mixed spectrograms firstly to an encoder of the audio transformer model, which then outputs an encoded patch sequence, secondly, to a reconstruction decoder and to a separation decoder. The outputs of the decoders are then used to update weights of the audio transformer model, and the process of iteratively "training" the audio transformer model and updating weights then continues (e.g., until loss saturates and learning effectively plateaus). It should be understood that "training" is used for ease of discussion herein, and that the phrasing refers to a training of the audio transformer model on large, unlabeled datasets such that the "trained" audio transformer model is then equipped to perform general-purpose audio representation tasks. From a prospective of training a downstream, task-specific classifier, however, this "training" of the audio transformer model may be referred to as a "pre-training" stage, as it refers to training the audio transformer model for generalized tasks, and not yet to specific tasks. Later training of the task-specific classifier that includes the trained audio transformer model may then take place, in order to train said model for task-specific audio representation tasks.

FIG. 1 illustrates a system 100 for training and utilizing a machine learning model, such as a transformer-based neural network, according to some embodiments.

In some embodiments, the system 100 may comprise an input interface for accessing training dataset 102 for the transformer-based neural network. For example, as illustrated in FIG. 1, the input interface may be constituted by a data storage interface 104 which may access the training data 102 from a data storage 106. For example, the data storage interface 104 may be a memory interface or a persistent storage interface, e.g., a hard disk or an SSD interface, but also a personal, local or wide area network interface such as a Bluetooth, ZigBee or Wi-Fi interface or an Ethernet or fiber optic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the model (e.g., a version of the machine learning model that has yet to be trained) which may be accessed by the system 100 from the data storage 106. It will be appreciated, however, that the training data 102 and the data representation 108 of the transformer-based neural network may also be respectively accessed from a different data storage, e.g., via a different subsystem of the data storage interface 104. Each subsystem may be of a type as is described above for the data storage interface 104. In other embodiments, the data representation 108 of the transformer-based neural network may be internally generated by the system 100 on the basis of design parameters for the neural network, and therefore may not explicitly be stored on the data storage 106. The system 100 may further comprise a processor subsystem 110 which may be configured to, during operation of the system 100, provide an iterative function as a substitute for a stack of layers of the transformer-based neural network to be trained. Here, respective layers of the stack of layers being substituted may have mutually shared weights and may receive, as input, an output of a previous layer, or for a first layer of the stack of layers, an initial activation, and a part of the input of the stack of layers. The processor subsystem 110 may be further configured to iteratively train and/or fine-tune the transformer-based neural network using the training data 102 (e.g., thus generating updated versions of the machine learning model with respect to a first "untrained" version of the model). Here, an iteration of the training by the processor subsystem 110 may comprise a forward propagation part and a reverse, or generation, propagation part.

The system 100 may further comprise an output interface for outputting a data representation 112 of the trained transformer-based neural network, and this data may also be referred to as trained model data 112. For example, as also illustrated in FIG. 1, the output interface may be constituted by the data storage interface 104, with said interface being in these embodiments an input/output ("IO") interface, via which the trained model data 112 may be stored in the data storage 106. For example, the data representation 108 defining the 'untrained' transformer-based neural network may during or after the training be replaced, at least in part by the data representation 112 of the trained neural network, in that the parameters of the transformer-based neural network, such as weights, hyperparameters, and other types of parameters of transformer-based neural networks, may be adapted to reflect the training on the training data 102. This is also illustrated in FIG. 1 by the reference numerals 108 and 112 referring to the same data record on the data storage 106. In other embodiments, the data representation 112 may be stored separately from the data representation 108 defining the 'untrained' transformer-based neural network. In some embodiments, the output interface may be separate from the data storage interface 104, but may in general be of a type as described above for the data storage interface 104.

The system 100 shown in FIG. 1 is one example of a system that may be utilized to train and then subsequently execute the trained machine learning models described herein.

FIG. 2 illustrates a computer-implemented method for training and utilizing a transformer-based neural network, according to some embodiments. The system 200 may include at least one computing system 202. The computing system 202 may include at least one processor 204 that is operatively connected to a memory unit 208. The processor 204 may include one or more integrated circuits that implement the functionality of a central processing unit (CPU) 206 and, in some embodiments, a graphics processing unit (GPU). The CPU 206 may be a commercially available processing unit that implements an instruction set such as one of the x86, ARM, Power, or MIPS instruction set families. During operation, the CPU 206 may execute stored program instructions that are retrieved from the memory unit 208. The stored program instructions may include software that controls operation of the CPU 206 to perform the operation described herein. In some examples, the processor 204 may be a system on a chip (SoC) that integrates functionality of the CPU 206, the memory unit 208, a network interface, and input/output interfaces into a single integrated device. The computing system 202 may implement an operating system for managing various aspects of the operation.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine learning model 210 or algorithm, a training dataset 212 for the machine learning model 210, raw source dataset 214, etc.

The computing system 202 may include a network interface device 220 that is configured to provide communication with external systems and devices. For example, the network interface device 220 may include a wired and/or wireless Ethernet interface as defined by Institute of Electrical and Electronics Engineers (IEEE) 802.11 family of standards. The network interface device 220 may include a cellular communication interface for communicating with a cellular network (e.g., 3G, 4G, 5G). The network interface device 220 may be further configured to provide a communication interface to an external network 222 or cloud.

The external network 222 may be referred to as the world-wide web or the Internet. The external network 222 may establish a standard communication protocol between computing devices. The external network 222 may allow information and data to be easily exchanged between computing devices and networks. One or more servers 224 may be in communication with the external network 222.

The computing system 202 may include an input/output (I/O) interface 218 that may be configured to provide digital and/or analog inputs and outputs. The I/O interface 218 may include additional serial interfaces for communicating with external devices (e.g., Universal Serial Bus (USB) interface).

The computing system 202 may include a human-machine interface (HMI) device 216 that may include any device that enables the system 200 to receive control input. Examples of input devices may include human interface inputs such as keyboards, mice, touchscreens, voice input devices, and other similar devices. The computing system 202 may include a display device 226. The computing system 202 may include hardware and software for outputting graphics and text information to the display device 226. The display device 226 may include an electronic display screen, projector, printer or other suitable device for displaying information to a user or operator. The computing system 202 may be further configured to allow interaction with remote HMI and remote display devices via the network interface device 220.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

The system 200 may implement a machine learning algorithm 210 that is configured to analyze the raw source dataset 214. The raw source dataset 214 may include raw or unprocessed sensor data that may be representative of an input dataset for a machine learning system. In some examples, the machine learning algorithm 210 may be a transformer-based neural network algorithm that is designed to perform a predetermined function. For example, the neural network algorithm may be configured to receive mixed audio signals, reconstruct the audio signals, and separate out the different audio signal sources within the mixed audio signal, as described below with regard to audio transformer model 310.

The computer system 200 may store a training dataset 212 for the machine learning algorithm 210. The training dataset 212 may represent a set of previously constructed data for training the machine learning algorithm 210. The training dataset 212 may be used by the machine learning algorithm 210 to learn weighting factors associated with a transformer-based neural network algorithm. The training dataset 212 may include a set of source data that has corresponding outcomes or results that the machine learning algorithm 210 tries to duplicate via the learning process.

The machine learning algorithm 210 may be operated in a learning mode using the training dataset 212 as input. The machine learning algorithm 210 may be executed over a number of iterations using the data from the training dataset 212. With each iteration, the machine learning algorithm 210 may update internal weighting factors based on the achieved results. For example, the machine learning algorithm 210 can compare output results (e.g., a reconstructed mixed spectrogram and separated spectrograms) with those included in the training dataset 212. Since the training dataset 212 includes the expected results, the machine learning algorithm 210 can determine when performance is acceptable. After the machine learning algorithm 210 achieves a predetermined performance level (e.g., X% agreement with the outcomes associated with the training dataset 212), the machine learning algorithm 210 may be executed using data that is not in the training dataset 212. The trained machine learning algorithm 210 may be applied to new datasets to generate annotated data.

The machine learning algorithm 210 may be configured to identify a particular feature in the raw source data 214. The raw source data 214 may include a plurality of instances or input dataset for which annotation results are desired. The machine learning algorithm 210 may be programmed to process the raw source data 214 to identify the presence of the particular features. The machine learning algorithm 210 may be configured to identify a feature in the raw source data 214 as a predetermined feature. The raw source data 214 may be derived from a variety of sources. For example, the raw source data 214 may be actual input data collected by a machine learning system. The raw source data 214 may be machine generated for testing the system. As an example, the raw source data 214 may include audio segments that are relevant to a nearby audio environment (also referred to as a sound environment).

In the example, the machine learning algorithm 210 may then process raw source data 214 and output an indication of audio signal sources are supported by audio signals within the mixed signal audio segment. A machine learning algorithm 210 may generate a confidence level or factor for each output generated. For example, a confidence value that exceeds a predetermined high-confidence threshold may indicate that the machine learning algorithm 210 is confident that the identified feature corresponds to the particular feature. A confidence value that is less than a low-confidence threshold may indicate that the machine learning algorithm 210 has some uncertainty that the particular feature is present.

FIG. 3A illustrates a process of performing a self-supervised learning technique onto an audio transformer model such that the model is configured to learn reconstruction and separation of mixed audio sources, according to some embodiments.

Process 300 illustrates a process flow in which mixed audio-based data samples 302 are transformed into spectrograms 306, which are then provided to audio transformer model 310 for a self-supervised training of the audio transformer model 310.

In some embodiments, a training dataset may include a plurality of mixed audio-based data samples 302, wherein one of the samples includes mixed audio-based data sample 304. Mixed audio-based data sample 304 may be defined as a "mixed" audio-based data sample due to the two or more total audio sources that are present within at least some portion of the overall time duration of mixed audio-based data sample 304. For example, mixed audio-based data sample 304 may resemble a sample that is ten seconds long, and wherein audio sources include a car horn, background music, and foreground human conversation, which are present during at least a portion of the ten second sample. As such, mixed audio-based data samples 302 resemble complex sound, or audio, environments.

Mixed audio-based data sample 304 may include components of time, frequency, and other components typical of a waveform (e.g., amplitude). Continuing with the above example, certain audio sources may appear louder or softer to a human ear, may have different pitches, and may fluctuate throughout the overall duration of the audio-based data sample.

Moreover, mixed audio-based data samples 302 are unlabeled from a perspective of audio transformer model 310. As an example, if two mixed audio-based data samples are randomly selected from within a mini batch and are then used as part of a training process of audio transformer model 310, a first mixed audio-based data sample 304 may refer to the example above, wherein audio sources that are common at a busy street corner in a city, and a second mixed audio-based data sample may be provided to the audio transformer model 310 at a same time, wherein audio sources of the second sample include sounds within a kitchen environment (e.g., a coffee maker is running, an air conditioning unit is humming, etc.).

Returning to the illustrations of process 300 in FIG. 3A, respective ones of mixed audio-based data samples 302 are then transformed into spectrograms 306. In some embodiments, all samples within the entire training dataset are transformed into spectrograms. However, in other embodiments, a subset, or mini batch, of mixed audio-based data samples of the plurality of mixed audio-based data samples 302 are transformed into spectrograms at a given time.

Spectrograms, as used herein, are defined as two-dimensional (2D) visual representations of mixed audio-based data samples 302, wherein the frequency component is plotted along an *X* axis, the time component is plotted along a *Y* axis, and the amplitude of the frequency component is plotted as an intensity of color within the plot. As such, spectrograms 306 enable frequency, time, and amplitude data of mixed audio-based data samples 302 to be represented on a single plot, or visual representation. An example of this 2D visual representation of a mixed audio-based data sample, such as mixed audio-based data sample 304, is illustrated by spectrogram 308 in FIG. 3A.

Audio-based data samples 302 are transformed into spectrograms 306 by computing the Short Time Fourier Transforms (STFTs) of the audio-based data samples 302.

In some embodiments, spectrograms 306 are plotted using Hertz (Hz) for the frequency component, and the *X* axis remains linear. However, in other embodiments, spectrograms 306 are further transformed into Mel spectrograms, and the frequency range of spectrograms 306 reflects a non-linear frequency range of the human ear. In the description that follows, both spectrograms and Mel spectrograms may be used to train audio transformer model 310.

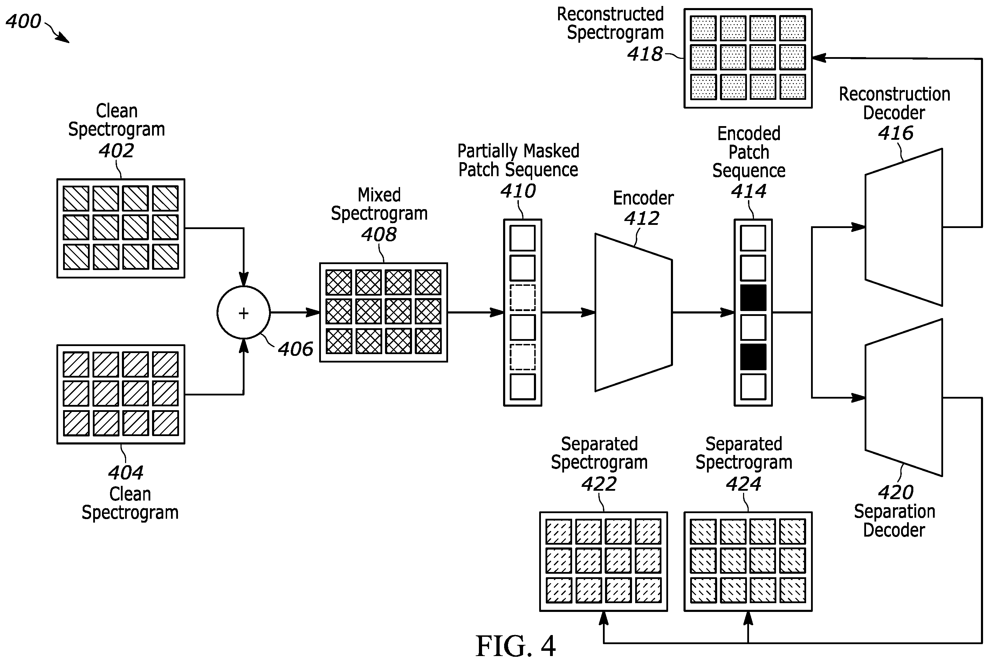

Returning again to process 300, respective ones of spectrograms 306 are then provided to audio transformer model 310 for training of the model via a self-supervised training technique. A given iteration of such a training process is illustrated in FIG. 4 and is additionally discussed below.

As additionally shown by arrow 312, given subsets of a total number of spectrograms 306 may be provided to audio transformer model 310 during a given round of training, and the process may then repeat a given number of times, or epochs (e.g., until loss saturates and learning effectively plateaus).

FIG. 3B illustrates a later process of executing the trained audio transformer model for use by a task-specific classifier, according to some embodiments.

Once processes 300 and 400 are complete, the trained version of audio transformer model 310 may then be incorporated for use within a larger context of a task-specific classifier. As shown in FIG. 3B, trained audio transformer model 352 may be viewed as one building block within a task-specific classifier 350.

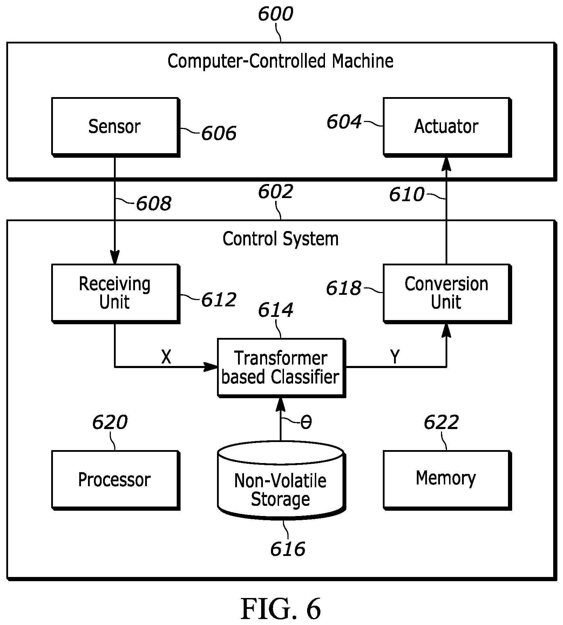

Additional examples of the applications of classifiers that include a trained audio transformer model 352 are described with regard to transformer-based classifier in FIGS. 6, 7, and 8 herein.

FIG. 4 illustrates a given iteration of training the audio transformer model to learn reconstruction and separation of mixed audio sources, according to some embodiments.

As illustrated by the encoder-decoder-decoder architecture in FIG. 4, audio transformer model 310 is configured to reconstruct a mixed spectrogram and also separate two spectrograms that have been previously and randomly mixed together. By mixing two spectrograms together (see process step 406), at least two or more audio sources within the larger and resulting mixed spectrogram is ensured. By combining multiple audio inputs, multiple acoustic events are present during at least some length of time within the mixed spectrogram. As such, audio transformer model 310 is trained for any generalized task, and any generalized task that takes place within a complex audio environment.

Process 400 continues from the depiction of process 300 in FIG. 3. At a moment in time shown in FIG. 4, at least a first mixed audio-based data sample and a second mixed audio-based data sample of mixed audio-based data samples 302 have been transformed into a first spectrogram and a second spectrogram, respectively. In particular embodiments illustrated in FIG. 4, the first and second spectrograms are transformed into Mel spectrograms.

The first and second spectrograms are illustrated as clean spectrogram 402 and clean spectrogram 404, respectively. It may be assumed that clean spectrograms 402 and 404 were transformed from mixed audio-based data samples that either already had a same time duration (e.g., ten seconds) or have been cropped such that they resemble the same time duration.

Clean spectrograms 402 and 404 have also been divided into spectrogram patches. In particular embodiments shown in FIG. 4, the spectrograms have been divided into twelve patches, respectively. However, other embodiments of clean spectrograms may be divided into more or less patches, with a minimum number of patches being two. Moreover, the number of spectrogram patches in clean spectrograms 402 and 404 determine the number of spectrogram patches in mixed spectrogram 408, reconstructed spectrogram 418, separated spectrogram 422, and separated spectrogram 424.

Returning to process 400, clean spectrograms 402 and 404 are then mixed together into mixed spectrogram 408, as illustrated by process step 406. Process step 406 may include multiple sub-process steps, including (1) a multiplying of clean spectrogram 402 by some random amplitude (e.g., that distorts the original amplitude of the corresponding original mixed audio-based data sample), (2) a multiplying of clean spectrogram 404 by another random amplitude, and (3) an adding of clean spectrogram 402 that has been multiplied by the random amplitude and clean spectrogram 404 that has been multiplied by the other random amplitude.

In some embodiments, process step 406 may also be understood using the following, wherein *X*₁(*t, f*) represents time-based (*t*) and frequency-based (*f*) data of clean spectrogram 402 (*X*₁)*, X*₂ (*t, f*) represents time-based (*t*) and frequency-based (*f*) data of clean spectrogram 404 (*X*₂), and *X*(*t, f*) represents time-based (*t*) and frequency-based (*f*) data of a resulting mixed spectrogram 408 (*X*): $X \left(t, f\right) = {aX}_{1} \left(t, f\right) + \left(1-a\right) {X}_{2} \left(t, f\right) .$

As illustrated in the above equation, clean spectrogram 402 is multiplied by some random value, *a*, which is between zero and one, while clean spectrogram 404 is multiplied by (1 - *a*).

Subsequently in process 400, mixed spectrogram 408 is then converted into a partially masked patch sequence 410. As illustrated in FIG. 4 by the dashed lines, two of the six total patches in partially masked patch sequence 410 have been masked.

The following paragraphs describe the encoder-decoder-decoder architecture of audio transformer model 310. At a high level, encoder 412 processes the unmasked spectrogram patches to generate a representation, which is then used by the decoders to predict the masked spectrogram patches.

Returning to process 400, partially masked patch sequence 410 is then provided to encoder 412. Encoder 412 is masked from utilizing two of the six total patches in partially masked patch sequence 410. As such, encoder 412 encodes the other (four) spectrogram patches in partially masked patch sequence 410, which have remained unmasked. Encoder 412 encodes the unmasked, other spectrogram patches to generate an encoded patch sequence 414. In some embodiments, the execution of encoder 412 may resemble the application of a 16 × 16 convolutional kernel to the unmasked, other spectrogram patches, which adds positional encoding to the unmasked, other spectrogram patches.

Encoded patch sequence 414 is then provided to both reconstruction decoder 416 and to separation decoder 420. As both decoders act independently of one another, they may be executed simultaneously or sequentially, depending upon various embodiments.

Reconstruction decoder 416 is executed to generate a reconstructed prediction of mixed spectrogram 408, based on encoded patch sequence 414. For example, reconstruction decoder 416 may predict normalized values of the spectrogram patches within mixed spectrogram 408, based on data within encoded patch sequence 414. This reconstructed prediction is illustrated by reconstructed spectrogram 418 in FIG. 4.

Subsequently, reconstructed spectrogram 418 is compared to mixed spectrogram 408 in order to compute a reconstruction loss, 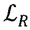 *.* The reconstruction loss may be computed by averaging a mean squared error (MSE) between the predicted, normalized values of the spectrogram patches of mixed spectrogram 408 (e.g., the spectrogram patches in reconstructed spectrogram 418) and the spectrogram patches of the actual mixed spectrogram 408. Moreover, since the predicted, normalized values of the spectrogram patches of mixed spectrogram 408 are generated using the unmasked spectrogram patches of partially masked patch sequence 410, the reconstruction loss focuses on a comparison of the other subset, namely the masked spectrogram patches.

As also illustrated in FIG. 4, separation decoder 420 is executed separate predictions of the first and/or second spectrograms, based on encoded patch sequence 414. In some embodiments, since separation decoder 420 is not conditioned to predict a specific source, permutation invariant training (PIT) loss is applied as the objective function for separation decoder 420, wherein pairs of original and estimated sources with minimum differences between them are optimized.

During execution of separation decoder 420, normalized values of spectrogram patches of clean spectrogram 402, for example, are predicted, based on encoded patch sequence 414. These predicted, normalized values of the spectrogram patches of clean spectrogram 402 are used to generate separated spectrogram 422. By subtracting separated spectrogram 422 from mixed spectrogram 408, the second separated spectrogram 424 is also predicted. Similarly, if normalized values of spectrogram patches of clean spectrogram 404 are first predicted, then those predictions may be used to generate separated spectrogram 424. Then separated spectrogram 422 would be generated by subtracting separated spectrogram 424 from mixed spectrogram 408, and so on through the various permutations.

In some embodiments, this execution of separation decoder 420 may also be understood using the following, wherein, on a per-patch basis, separated spectrogram 422 (*S*₁(*t, f*)) is firstly generated. Then, by subtracting separated spectrogram 422 from mixed spectrogram 408 (*X*(*t, f*))*,* separated spectrogram 424 (*S*₂(*t, f*)) is generated: ${S}_{2} \left(t, f\right) = X \left(t, f\right) - {S}_{1} \left(t, f\right) .$

Subsequently, separated spectrograms 422 and 424 and clean spectrograms 402 and 404 are compared against one another in pairs to in order to compute a separation loss, 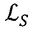 . This pairwise MSE calculation may resemble the following: ${L}_{S} = min \left[MSE\left({X}_{1}, {S}_{1}\right)+MSE\left({X}_{2}, {S}_{2}\right),MSE\left({X}_{1}, {S}_{2}\right)+MSE\left({X}_{2}, {S}_{1}\right)\right] .$

After both the reconstruction loss and separation loss have been computed, a total loss is then determined by computing a weighted sum. For example, the total loss may be computed by summing the reconstruction loss and the separation loss, weighted by a factor *λ*. This may also be written as the following, which is defined as the total objective function for the training that is illustrated by process 400: $L = {λL}_{R} + \left(1-λ\right) {L}_{S} .$

After computing the total loss, one or more weights of the audio transformer model are updated, based on these computations of reconstruction and separation losses. As indicated by arrow 312, a process of 400 may then repeat with additional clean spectrograms.

By causing audio transformer model 310 to learn a representation that includes the semantic features from inputs from mixed audio-based data samples while also causing it to separate the inputs back out again, audio transformer model 310 is thus trained for generalized tasks.

Once a given number of epochs of training have been completed, the trained version of audio transformer model 310 is output for use within a downstream task-specific classifier, such as transformer-based classifier 350.

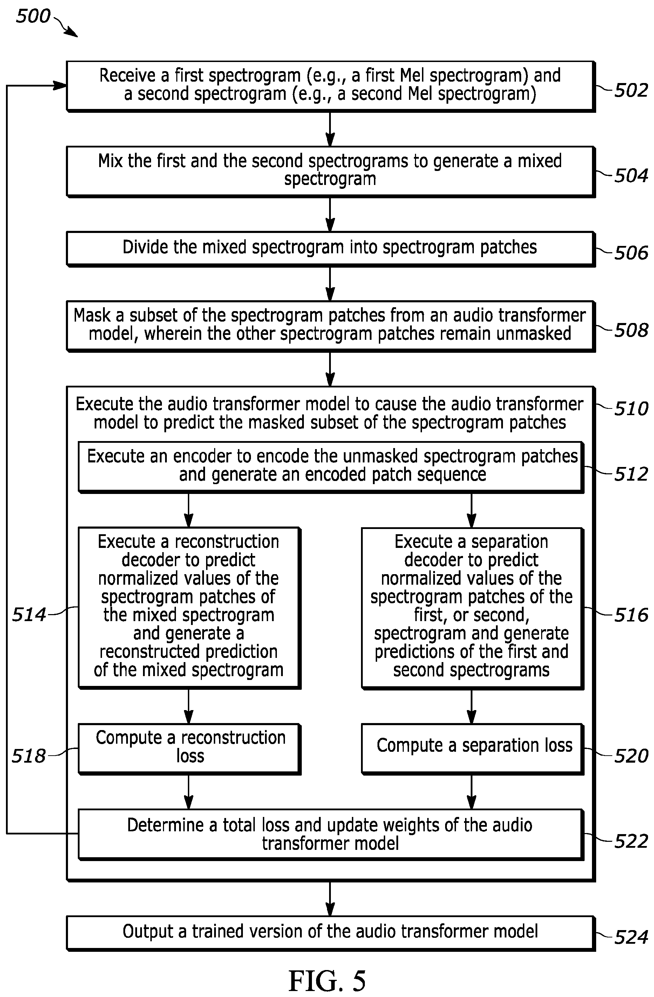

FIG. 5 is a flow diagram that illustrates a process of training, via a self-supervised audio representation learning process, an audio transformer model, according to some embodiments.

Process 500 resembles one or more rounds of training of an audio transformer model, such as audio transformer model 310.

In block 502, first and second spectrograms are received. In some embodiments, the first and second spectrograms may resemble clean spectrograms 402 and 404, shown in FIG. 4.

In block 504, the first and spectrograms are mixed together by multiplying the respective spectrograms by random amplitudes and then adding them together. The resulting spectrogram is referred to herein as a mixed spectrogram, such as mixed spectrogram 408.

In block 506, the mixed spectrogram is divided into a number of spectrogram patches. A given subset of those spectrogram patches are then masked, as illustrated in block 508. The remaining other spectrogram patches are unmasked.

Blocks 510 - 522 refer to the execution of the audio transformer model, which is configured to learn to predict the masked subset of spectrogram patches of the mixed spectrogram, as illustrated in block 510. In block 512, the encoder of the audio transformer model is executed in order to generate an encoded patch sequence.

The encoded patch sequence is then provided to a reconstruction decoder and to a separation decoder, as illustrated in blocks 514 and 516. In block 514, the reconstruction decoder is executed in order to predict normalized values of the spectrogram patches of the mixed spectrogram. The generated reconstruction spectrogram is then compared to the original mixed spectrogram in order to compute a reconstruction loss, as illustrated in block 518.

In block 516, the separation decoder is executed in order to predict normalized values of the spectrogram patches of the first, or second, spectrogram. Generated separation spectrograms are then compared to the original first and second spectrograms in order to compute a separation loss, as illustrated in block 520.

In block 522, a total loss is determined based on the computed reconstruction and separation losses, and one or more weights of the audio transformer model are updated accordingly.

As indicated by the arrow between block 522 and block 502, this process may repeat a number of times, such as until the total loss saturates and learning effectively plateaus. After such a moment in time, a trained version of the audio transformer model is output for use within a downstream, task-specific classifier, as illustrated in block 524. Additional examples of the use of the trained version of the audio transformer model are described below, with regard to FIGS. 6 - 8.

FIG. 6 illustrates a schematic diagram of an interaction between a computer-controlled machine and a control system, according to some embodiments.

The methods and systems disclosed herein can be used in many different applications. This section provides some practical applications of the proposed system.

The methods and systems disclosed herein can be used in many different applications. Determining known and unknown audio sources can be useful for a plethora of technologies, examples of which are illustrated in FIGS. 6 - 8. FIG. 6 depicts a schematic diagram of an interaction between a computer-controlled machine 600 and a control system 602. Computer-controlled machine 600 includes actuator 604 and sensor 606. Actuator 604 may include one or more actuators and sensor 606 may include one or more sensors. Sensor 606 is configured to sense a condition of computer-controlled machine 600. Sensor 606 may be configured to sense ID and/or OOD data, and the corresponding processors can be configured to determine whether the data is ID or OOD according to the teachings herein.

Sensor 606 may be configured to encode the sensed condition into sensor signals 608 and to transmit sensor signals 608 to control system 602. Non-limiting examples of sensor 606 include microphones, pressure sensors, ultrasonic sensors, optical sensors, and other sensors configured to detect audio signals. In one embodiment, sensor 606 is an ultrasonic sensor configured to sense high-frequency sound waves of an environment proximate to computer-controlled machine 600.

Control system 602 is configured to receive sensor signals 608 from computer-controlled machine 600. As set forth below, control system 602 may be further configured to compute actuator control commands 610 depending on the sensor signals and to transmit actuator control commands 610 to actuator 604 of computer-controlled machine 600.

As shown in FIG. 6, control system 602 includes receiving unit 612. Receiving unit 612 may be configured to receive sensor signals 608 from sensor 606 and to transform sensor signals 608 into input signals *x*. In an alternative embodiment, sensor signals 608 are received directly as input signals *x* without receiving unit 612. Each input signal *x* may be a portion of each sensor signal 608. Receiving unit 612 may be configured to process each sensor signal 608 to product each input signal *x*. Input signal *x* may include data corresponding to an image recorded by sensor 606.

Control system 602 includes a transformer-based classifier 614. Transformer-based classifier 614 may be configured to classify input signals *x* into one or more labels using a machine learning algorithm, such as by using the reconstruction and separation techniques within the audio transformer models described above. Transformer-based classifier 614 is configured to be parametrized by parameters, such as those described above (e.g., parameter *θ*). Parameters *θ* may be stored in and provided by non-volatile storage 616. Transformer-based classifier 614 is configured to determine output signals *y* from input signals *x.* Each output signal *y* includes information that assigns one or more labels to each input signal *x.* Transformer-based classifier 614 may transmit output signals *y* to conversion unit 618. Conversion unit 618 is configured to covert output signals *y* into actuator control commands 610. Control system 602 is configured to transmit actuator control commands 610 to actuator 604, which is configured to actuate computer-controlled machine 600 in response to actuator control commands 610. In another embodiment, actuator 604 is configured to actuate computer-controlled machine 600 based directly on output signals *y.*

Upon receipt of actuator control commands 610 by actuator 604, actuator 604 is configured to execute an action corresponding to the related actuator control command 610. Actuator 604 may include a control logic configured to transform actuator control commands 610 into a second actuator control command, which is utilized to control actuator 604. In one or more embodiments, actuator control commands 610 may be utilized to control a display instead of or in addition to an actuator.

In another embodiment, control system 602 includes sensor 606 instead of or in addition to computer-controlled machine 600 including sensor 606. Control system 602 may also include actuator 604 instead of or in addition to computer-controlled machine 600 including actuator 604.

As shown in FIG. 6, control system 602 also includes processor 620 and memory 622. Processor 620 may include one or more processors. Memory 622 may include one or more memory devices. The transformer-based classifier 614 of one or more embodiments may be implemented by control system 602, which includes non-volatile storage 616, processor 620 and memory 622.

Non-volatile storage 616 may include one or more persistent data storage devices such as a hard drive, optical drive, tape drive, non-volatile solid-state device, cloud storage or any other device capable of persistently storing information. Processor 620 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 622. Memory 622 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. Moreover, processor 620 and memory 622 may be configured to provide collected data to one or more other computing devices that are configured to train and/or validate the machine learning model within domain-specific embodiments shown throughout FIGS. 13 - 19. Such collected data may be used to generate training datasets and validation datasets for various stages in preparing and executing a machine learning model into industry-grade applications. Within a context described herein with regard to audio signal reconstruction and audio source separation, processor 620 and memory 622 may be coupled to or otherwise remotely connected to computing devices that may then conduct classification processes such as those described above.

Processor 620 may be configured to read into memory 622 and execute computer-executable instructions residing in non-volatile storage 616 and embodying one or more machine-learning algorithms and/or methodologies of one or more embodiments. Non-volatile storage 616 may include one or more operating systems and applications. Non-volatile storage 616 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 620, the computer-executable instructions of non-volatile storage 616 may cause control system 602 to implement one or more of the machine-learning algorithms and/or methodologies as disclosed herein. Non-volatile storage 616 may also include machine-learning data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

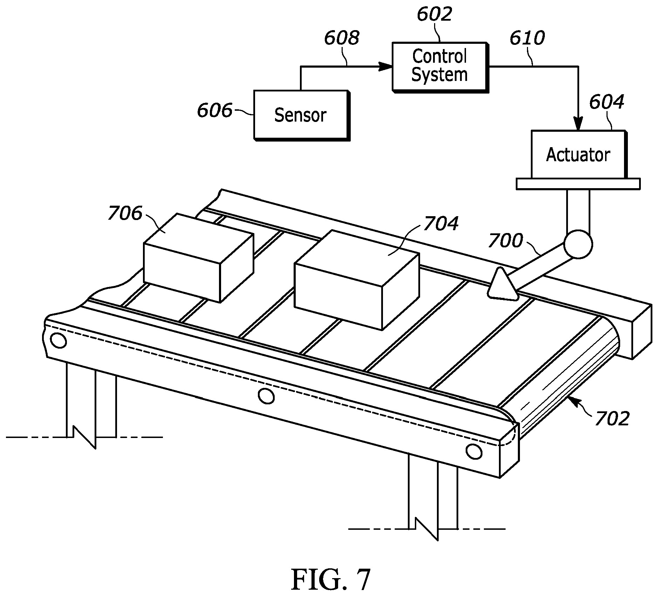

FIG. 7 depicts a schematic diagram of control system 602 configured to control a system 700 (e.g., manufacturing machine), such as a punch cutter, a cutter or a gun drill, of manufacturing system 702, such as part of a production line. Control system 602 may be configured to control actuator 604, which is configured to control system 700 (e.g., manufacturing machine).

Sensor 606 of system 700 (e.g., manufacturing machine) may be an optical or ultrasonic sensor that is configured to capture one or more properties of manufactured product 704. Transformer-based classifier 614 may be configured to determine a state of manufacturing system 702 from one or more of the captured properties. For example, sensor 606 may provide mixed audio-based data samples to transformer-based classifier 614 of control system 602, which then determines a normal range, frequency, amplitude, etc. of the local manufacturing center environment. If transformer-based classifier 614 detects that mixed audio-based data samples are outside of the normal range, control system 602 may be configured to cause actuator 604 to control the system 700 and halt the flow of the conveyer belt, or some similar action.

The actuator 604 may be further configured to control functions of system 700 with regards to subsequent manufactured product 706 of system 700 depending on the determined state of manufacturing system 702.

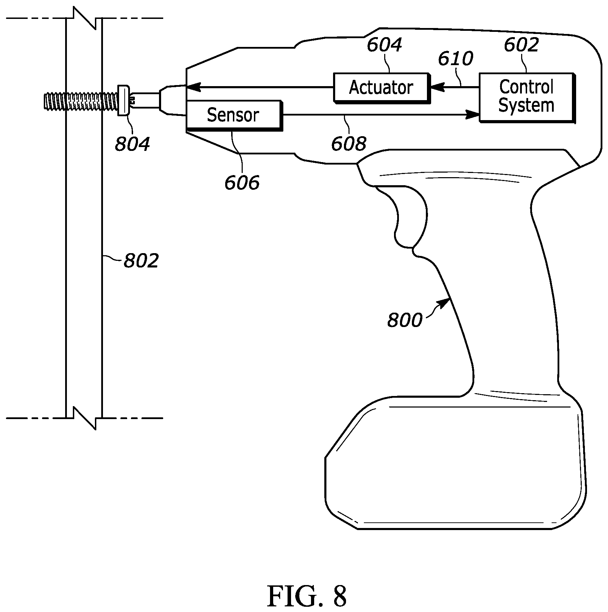

FIG. 8 depicts a schematic diagram of control system 602 configured to control power tool 800, such as a power drill or driver, that has an at least partially autonomous mode. Control system 602 may be configured to control actuator 604, which is configured to control power tool 800.

Sensor 606 of power tool 800 may be an optical or ultrasonic sensor configured to capture one or more properties of work surface 802 and/or fastener 804 being driven into work surface 802. Transformer-based classifier 614 within control system 602 may be configured to determine a state of work surface 802 and/or fastener 804 relative to work surface 802 from one or more of the captured properties. The state may be fastener 804 being flush with work surface 802. The state may alternatively be hardness of work surface 802. In other examples, the state may be a change in frequency and/or amplitude of waveforms in the surrounding audio environment.

Actuator 604 may be configured to control power tool 800 such that the driving function of power tool 800 is adjusted depending on the determined state of fastener 804 relative to work surface 802 or one or more captured properties of work surface 802. For example, actuator 804 may discontinue the driving function if the state of fastener 804 is flush relative to work surface 802. As another non-limiting example, actuator 804 may apply additional or less torque depending on the hardness of work surface 802.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A computer-implemented method for training an audio transformer model, the computer-implemented method comprising:
receiving a mixed spectrogram comprising a first spectrogram and a second spectrogram that has been divided into spectrogram patches;
masking a subset of the spectrogram patches from the audio transformer model, wherein other spectrogram patches of the spectrogram patches remain unmasked;
executing the audio transformer model to cause the audio transformer model to predict the masked subset of the spectrogram patches, wherein the executing comprises:
encoding the other spectrogram patches to generate an encoded patch sequence;
predicting normalized values of the spectrogram patches of the mixed spectrogram, based on the encoded patch sequence;
predicting normalized values of spectrogram patches of the first spectrogram, based on the encoded patch sequence;
determining a total loss based on (i) the predicted, normalized values of the spectrogram patches of the mixed spectrogram and (ii) the predicted, normalized values of the spectrogram patches of the first spectrogram; and
updating weights of the audio transformer model based on the total loss; and
outputting a trained version of the audio transformer model.

2. The computer-implemented method of claim 1, further comprising:
transforming a first audio-based data sample and a second audio-based data sample into the first and the second spectrograms, respectively, wherein the first and the second spectrograms are visual representations of frequency, time, and amplitude data of the first and the second audio-based data samples, respectively.

3. The computer-implemented method of claim 2, wherein the first and the second audio-based data samples are unlabeled audio-based data samples.

4. The computer-implemented method of claim 2, wherein the first and the second audio-based data samples have two or more audio sources that are present within the respective audio-based data samples.

5. The computer-implemented method of claim 1, further comprising generating the mixed spectrogram, wherein the generating comprises:
multiplying the first spectrogram by a random amplitude;
multiplying the second spectrogram by another random amplitude; and
adding the first spectrogram with the random amplitude to the second spectrogram with the other random amplitude.

6. The computer-implemented method of claim 1, wherein the first and the second spectrograms are Mel spectrograms, respectively.

7. The computer-implemented method of claim 1, wherein the determining the total loss comprises:
computing a reconstruction loss by averaging a mean squared error between the spectrogram patches of the mixed spectrogram and the predicted, normalized values of the spectrogram patches of the mixed spectrogram.

8. The computer-implemented method of claim 7, wherein the determining the total loss further comprises:
computing a separation loss by minimizing a mean squared error between spectrogram patches of the first and second spectrograms and the predicted, normalized values of the spectrogram patches of the first spectrogram.

9. The computer-implemented method of claim 8, wherein the determining the total loss further comprises:
computing a weighted sum of the reconstruction loss and the separation loss to determine the total loss.

10. A computer-implemented method for training an audio transformer model, the computer-implemented method comprising:
receiving a mixed spectrogram comprising a first spectrogram and a second spectrogram that has been divided into spectrogram patches;
masking a subset of the spectrogram patches from the audio transformer model, wherein other spectrogram patches of the spectrogram patches remain unmasked;
executing the audio transformer model to cause the audio transformer model to predict the masked subset of the spectrogram patches, wherein the executing comprises:
executing an encoder to generate an encoded patch sequence;
executing a reconstruction decoder to generate a reconstructed prediction of the mixed spectrogram, based on the encoded patch sequence;
executing a separation decoder to generate separate predictions of the first and the second spectrograms, based on the encoded patch sequence;
computing a reconstruction loss based on the mixed spectrogram and the reconstructed prediction of the mixed spectrogram;
computing a separation loss based on the first and second spectrograms and the separate predictions of the first and the second spectrograms; and
updating weights of the audio transformer model based on the reconstruction loss and the separation loss; and
outputting a trained version of the audio transformer model.

11. The computer-implemented method of claim 10, wherein the executing the encoder comprises:
applying a 16 × 16 convolutional kernel to the unmasked, other spectrogram patches to add positional encoding to the unmasked, other spectrogram patches.

12. The computer-implemented method of claim 10, wherein the executing the reconstruction decoder comprises:
predicting normalized values of the spectrogram patches of the mixed spectrogram, based on the encoded patch sequence.

13. The computer-implemented method of claim 10, wherein the executing the separation decoder comprises:
predicting normalized values of spectrogram patches of the first spectrogram, based on the encoded patch sequence.

14. The computer-implemented method of claim 10, further comprising:
transforming a first audio-based data sample and a second audio-based data sample into the first and the second spectrograms, respectively, wherein the first and the second spectrograms are visual representations of frequency, time, and amplitude data of the first and the second audio-based data samples, respectively.

15. The computer-implemented method of claim 10, further comprising generating the mixed spectrogram, wherein the generating comprises:
multiplying the first spectrogram by a random amplitude;
multiplying the second spectrogram by another random amplitude; and
adding the first spectrogram with the random amplitude to the second spectrogram with the other random amplitude.

16. The computer-implemented method of claim 10, wherein the mixed spectrogram is a Mel spectrogram.

17. A non-transitory, computer-readable medium storing program instructions that, when executed on or across a processor, cause the processor to:
receive a mixed spectrogram comprising a first spectrogram and a second spectrogram that has been divided into spectrogram patches;
mask a subset of the spectrogram patches from the audio transformer model, wherein other spectrogram patches of the spectrogram patches remain unmasked;
execute an audio transformer model to cause the audio transformer model to predict the masked subset of the spectrogram patches, wherein the execution further causes the processor to:
encode the other spectrogram patches to generate an encoded patch sequence;
predict normalized values of the spectrogram patches of the mixed spectrogram, based on the encoded patch sequence; and
predict normalized values of spectrogram patches of the first spectrogram, based on the encoded patch sequence;
determine a total loss based on (i) the predicted, normalized values of the spectrogram patches of the mixed spectrogram and (ii) the predicted, normalized values of the spectrogram patches of the first spectrogram;
update weights of the audio transformer model based on the total loss; and
output a trained version of the audio transformer model.

18. The non-transitory, computer-readable medium of claim 17, wherein, to determine the total loss, the program instructions cause the processor to:
compute a reconstruction loss by averaging a mean squared error between the spectrogram patches of the mixed spectrogram and the predicted, normalized values of the spectrogram patches of the mixed spectrogram.

19. The non-transitory, computer-readable medium of claim 18, wherein, to determine the total loss, the program instructions further cause the processor to:
compute a separation loss by minimizing a mean squared error between spectrogram patches of the first and second spectrograms and the predicted, normalized values of the spectrogram patches of the first spectrogram.

20. The non-transitory, computer-readable medium of claim 19, wherein, to determine the total loss, the program instructions further cause the processor to:
compute a weighted sum of the reconstruction loss and the separation loss to determine the total loss.
